# EUROPEAN PATENT SPECIFICATION

(11) **EP 2 960 281 B1**
(45) Date of publication and mention of the grant of the patent: **12.10.2016**
(21) Application number: 15173540.4
(22) Date of filing: 24.06.2015
(51) Int. Cl.: G02B 1/04

(54) **COVER WINDOW FOR DISPLAY DEVICE, DISPLAY DEVICE INCLUDING THE SAME, AND METHOD FOR MANUFACTURING THE SAME**
ABDECKFENSTER FÜR EINE ANZEIGEVORRICHTUNG, ANZEIGEVORRICHTUNG DAMIT UND VERFAHREN ZUR HERSTELLUNG DAVON
FENÊTRE DE RECOUVREMENT POUR DISPOSITIF D'AFFICHAGE, DISPOSITIF D'AFFICHAGE COMPRENANT CELUI-CI ET PROCÉDÉ DE FABRICATION DE CELUI-CI

(30) Priority: 24.06.2014 KR 20140077608
(43) Date of publication of application: 30.12.2015
(73) Proprietor: Samsung Display Co., Ltd., Gyeonggi-do (KR)
(72) Inventor: Jeong, Yong Cheol, Gyeonggi-do (KR); Nam, Seung Wook, Chungcheongnam-do (KR); Im, Ji Hyuk, Gyeonggi-do (KR)
(74) Representative: Gulde & Partner

(56) References cited:
- FR-A1- 2 727 416
- JP-A- 2004 202 996
- JP-A- 2009 073 944
- US-A1- 2013 331 476

## Description

### BACKGROUND

### 1. Field

Embodiments relate to a window for a display device, a display device including the same, and a method for manufacturing a window for a display device.

### 2. Description of the Related Art

Mobile electronic devices include mobile phones, navigation systems, digital cameras, electronic books, portable game machines, and various terminals. The mobile electronic devices may include a liquid crystal display (LCD) or an organic light emitting diode (OLED) display applied as a display device.

A display device used in such mobile electronic devices has a transparent window that is provided at the front of a display panel and through which a user sees a display unit. The window may be formed at the outermost position of the device, and the window may be resistant to external impact so as to protect the display panel inside the display device.

DocumentUS-A-2013/331476 describes hard coating composition used for the preparation of optical film or sheet in display.The coating composition comprises an alicyclic epoxy group-containing siloxane resin and a polymerization initiator selected from a list of compounds comprising diphenyldiodonium hexafluorophosphate salt. Other suitable initiators such as aryl sulfonium salt having phosphate or antimonate as counterion are also mentioned.

Document JP-A-2004202996 describes a process for the manufacture of a cover window capable of enhancing visibility of a display in a portable device. The coating composition comprises organosilicon compounds and/or a hydrolyzate thereof, a solvent, a amine compound as catalyst and cyclohexyl phenyl ketone as heat-hardening initiator. The coating material is applied on a polymethylmethacrylate base material and cured to form hard coat layer.

Document JP-A-2009073944 refers to a laminated product comprising a cured layer of an active energy ray-curable composition containing a silicon-based compound formed on a thermoplastic resin molded product and an iodonium salt-based photoinitiator such as a iodonium salt having tetra-(pentafluorophenyl)borate or hexafluorophosphate as counteranion or a sulfonium salt with hexafluorophosphate.

Document FR-A-2 727 416 describes heat activated cationic initiators of the borate type for the polymerisation or crosslinking of functional monomers and/or polymers comprising at least one anionic borate moiety and at least one cationic moiety selected from sulphonium salts, ammonium salts, phosphonium salts, oxonium salts and iodonium salts. Among the lists of suitable salts, diaryl sulfonium tetrakis(pentafluorophenyl)borate salts is disclosed.

### SUMMARY

Embodiments are directed to a window for a display device, a display device including the same, and a method for manufacturing a window for a display device.

According to one aspect of the present invention, there is provided a cover window including a base film; and a coating layer on the base film, wherein the coating layer is formed by polymerization of a coating composition that includes a monomer, a iodine-based initiator represent by Formula 2 and a borate-based initiator represented by Formula 3.

The coating composition may further include a solvent.

The monomer may be a compound represented by Formula 1: 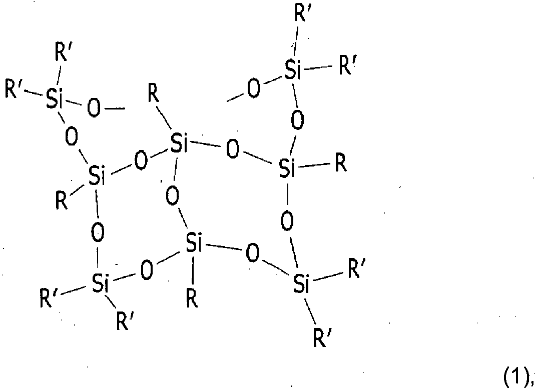 wherein, in Formula 1, R may be CH₃, and R' may be an epoxy-containing group.

The coating composition includes a iodine-based initiator represented by Formula 2:

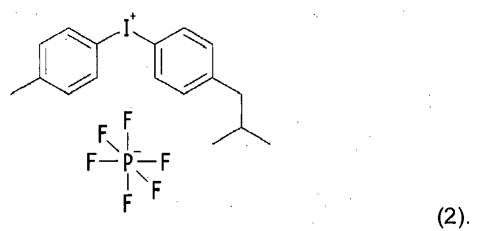

5 The coating composition includes a borate-based initiator represented by Formula 3: 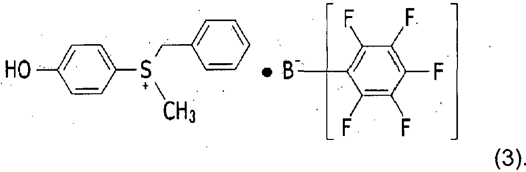 In particular, a weight ratio of the iodine based initiator and the borate-based initiator is 1 : 2 to 2 : 1, in particular 1 : 1.

The iodine-based initiator and the borate-based initiator may be included in the coating composition in an amount of 0.5 wt% to 8.0 wt% cumulative amount of all initiators), based on a total weight of the coating composition.

The monomer may be included in the coating composition in an amount of 40 wt% to 90 wt%, based on a total weight of the coating composition.

The solvent may be methyl ethyl ketone.

According to another aspect of the present invention, there is provided a display device including a display panel; and the before mentioned cover window on the display panel.

According to another aspect of the present invention, there is provided a method of manufacturing a cover window, the method including providing a base film; coating a coating composition on the base film, wherein the coating composition includes a monomer, a iodine-based initiator represented by Formula 2 and a borate-based initiator represented by Formula 3; polymerization of the coating composition; and annealing the hardened coating composition.

The annealing may be performed at a same humidity as the providing the base film, the coating the coating composition on the base film, or the drying and hardening the coating composition.

### BRIEF DESCRIPTION OF THE DRAWINGS

Features will be apparent to those of skill in the art by describing in detail exemplary embodiments with reference to the attached drawings in which:
FIG. 1 illustrates an exploded perspective view of a display device according to an exemplary embodiment.
FIG. 2 illustrates a cross-sectional view of a cover window according to an exemplary embodiment.
FIG. 3 illustrates stages in a manufacturing process of a cover window according to an exemplary embodiment.
FIG. 4 illustrates a yellowing index graph for an Exemplary Embodiment and a Comparative Example.
FIG. 5 illustrates a yellowing index graph for an Exemplary Embodiment and a Comparative Example.

### DETAILED DESCRIPTION

Example embodiments will now be described more fully hereinafter with reference to the accompanying drawings.

In the drawing figures, the dimensions of layers and regions may be exaggerated for clarity of illustration. Like reference numerals refer to like elements throughout.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

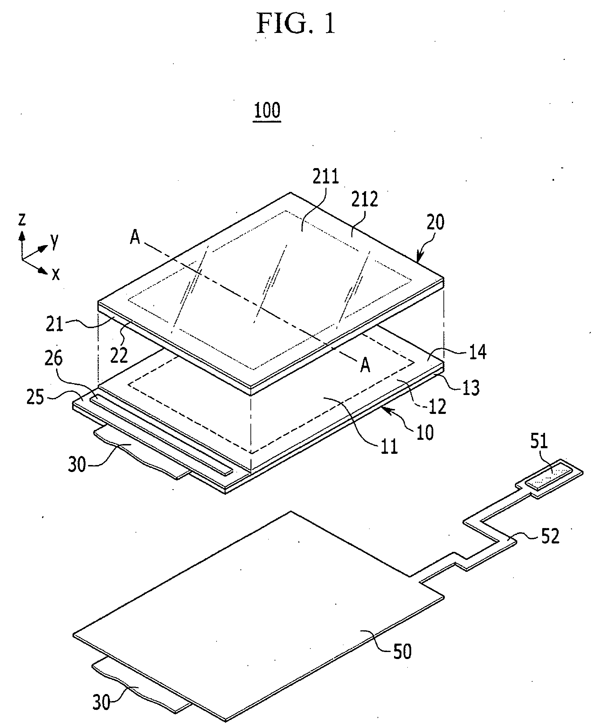

First, a display device according to an exemplary embodiment will be described with reference to FIG. 1.

FIG. 1 illustrates an exploded perspective view of a display device according to an exemplary embodiment.

Referring to FIG. 1, a display device 100 according to an exemplary embodiment includes a display panel 10 (for displaying images) and a cover window 20 on a front side of the display panel 10 and protecting the display panel 10.

In an implementation, the display panel 10 may be an organic light emitting panel. In another implementation, the display panel 10 may be another type of display, e.g., a liquid crystal display (LCD), and the display panel 10 may be a display panel including of a lower substrate, a field generating electrode, and a liquid crystal layer without a separate upper substrate. In the present exemplary embodiment, for convenience of description, the organic light emitting panel is described as an example.

The display panel 10 may be electrically connected to a printed circuit board (PCB) 50 through a flexible printed circuit 30.

Pixels, e.g., basic units for expressing an image, may be arranged in a matrix form on a first substrate 13 of the display panel 10, and a second substrate 14 may be bonded to the first substrate 13 through a sealing member (not shown) to protect the pixels. The first substrate 13 may be a rear substrate, and the second substrate 14 may be a front substrate.

For example, in an active matrix organic light emitting display panel, each pixel may include an organic light emitting element (not shown) including an anode electrode, an organic light emitting layer, and a cathode electrode, and a driving circuit unit (not shown) driving the organic light emitting element. The driving circuit unit may be a thin film transistor (TFT). A data line may be connected to a source terminal of the TFT, and a gate line may be connected to a gate terminal of the TFT. Either one of the anode electrode and the cathode electrode of the organic light emitting element may be connected to a drain terminal of the TFT.

The data line and the gate line may be connected to the PCB 50 through the flexible printed circuit 30. When an electrical signal is input to the source terminal and the gate terminal of the TFT through the PCB 50, the TFT may be turned on or off according to the signal input to output an electrical signal for driving pixels to the drain terminal.

An integrated circuit (IC) chip 26 may be mounted on the first substrate 13 to control the display panel 10. The IC chip 26 may generate timing signals for applying a data driving signal and a gate driving signal with appropriate timing. The IC chip 26 may apply the generated timing signals to the data line and the gate line of the display panel 10, respectively. A protective layer 25 may be formed around the IC chip 26 to protect the IC chip 26.

Electronic elements (not shown) for processing driving signals may be mounted on the PCB 50. The PCB 50 may include a connector 51 and an extending part 52. The extending part 52 may be installed in one end of the connector 51 to transmit an external signal to the PCB 50.

The cover window 20 (protecting the display panel 10) is positioned in front of the display panel 10. The cover window 20 protects the display panel 10 so that the display panel 10 may not be broken due to, e.g., external impact. The cover window 20 may be attached to the display panel 10 by an adhesive layer (not shown). In an implementation, the display panel 10 and the cover window 20 may be formed to be spaced from one another with an air layer formed therebetween.

The cover window 20 includes a base film 21 and a coating layer 22 on the base film 21.

The base film 21 may include a transparent part 211 in a region corresponding to or overlying the display unit 11 of the display panel 10 to allow the display unit 11 to be visible to the outside, and an opaque part 212 in a region corresponding to or overlying a non-display part 12 of the display panel 10 to prevent the non-display part 12 from being visible to the outside. The opaque part 212 may shroud wiring, components, or the like that are in the non-display part 12 of the display panel 10 such that they are invisible to the outside. The opaque part 212 may include, e.g., a logo of a product, a decorative pattern, or the like. In an implementation, the base film 21 may include the transparent part 211 and the opaque part 212, or the base film 21 may only include the transparent part 211.

The base film 21 may be made of, e.g., polyethylene terephthalate (PET), triacetyl cellulose (TAC), a polyimide (PI), a polycarbonate (PC), a thermoplastic polyurethane (TPU), or a silicon rubber.

The coating layer 22 is formed by coating and hardening, i.e. polymerization of a coating composition on the base film 21. The coating layer 22 according to an exemplary embodiment has hardness of a predetermined degree and reduces a yellowing phenomenon that may be generated in the coating layer 22 by or in response to UV. The coating composition will be described below.

The display device 100 may be formed of a material that is capable of being bent. For example, the display device 100 may be bent along the line A-A, and thus the cover window 20 may also be bent along the line A-A.

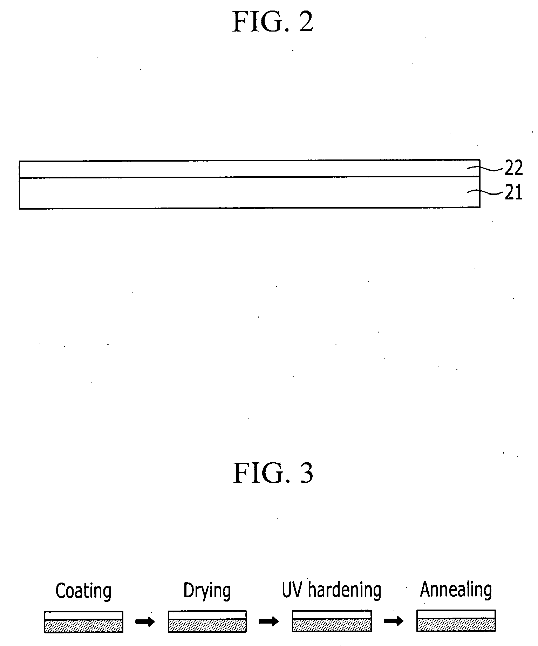

Next, the cover window 20 of the display device 100 according to an exemplary embodiment will be described with reference to FIG. 2.

FIG. 2 illustrates a cross-sectional view of a cover window 20. As shown in FIG. 2, the cover window 20 may include the base film 21 and the coating layer 22 on the base film 21.

In an implementation, the coating layer 22 may be only on the base film 21, or any shape of the cover window is possible. For example, a configuration described in the present specification may include the coating film, the base film, and the adhesive layer adhering the coating film and the base film.

The coating layer 22 according to an exemplary embodiment is formed by coating and hardening (polymerization) the coating composition on the base film 21.

The coating composition includes a monomer, an initiator, and a solvent. Hence, in a primary stage of the cover window the base film 21 is coated by the coating composition and then polymerization of the composition is initiated by light and/or heating thereby forming the polymeric coating layer 22.

The monomer according to an exemplary embodiment may be a hybrimer as an organic-inorganic hybrid material. In an implementation, the monomer may be an organooligosiloxane including more than one epoxy group as a functional group. In particular, the monomer may be a compound represented by Formula 1, below.

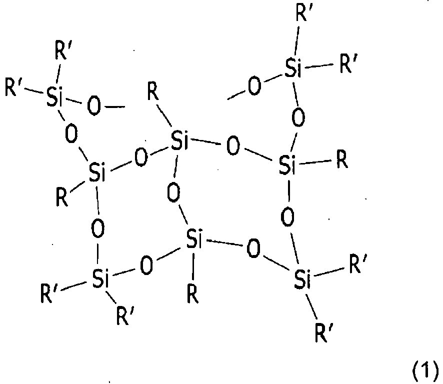

In Formula 1, R is CH₃ and R' is an epoxy-containing group (for example, R' = epoxy ethyl group). The monomer will be cross-linked through the epoxy group.

The monomer may be included in the coating composition in an amount of 40 wt% to 90 wt%, e.g., 60 wt%, based on a total weight of the coating composition.

The coating composition further includes a based initiator and a borate-based initiator for polymerization The initiators will start - under certain conditions - the polymerization reaction of the above mentioned monomer.

The iodine-based initiator is a compound represented by Formula 2, below. The borate-based initiator is a compound represented by Formula 3, below. 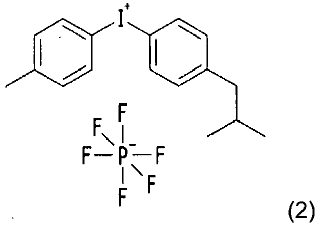 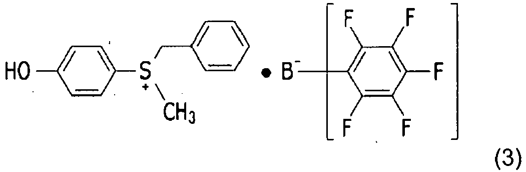 For example, the initiators can be activated by light or heat in a process of forming the coating layer, and the monomer will then be polymerized by the activated initiator.

The initiator may be included in the composition in an amount of 0.5 wt% to 8.0 wt% cumulative amount of both initiators, e.g., 2 wt%. Including the initiator in the described amounts may help ensure that a reaction speed for the light or the heat is appropriately controlled.

The solvent according to an exemplary embodiment may include, e.g., methyl ethyl ketone (MEK).

The coating layer 22 formed from the described coating composition may not only have the hardness suitable for the outer surface of the display device, but may also help reduce and/or prevent the yellowing phenomenon generated by exposure to UV over a long time. For example, reliability and durability of the cover window may be improved.

FIG. 3 illustrates stages in a manufacturing process of a cover window according to an exemplary embodiment.

First, a base film 21 may be formed by using, e.g., polyethylene terephthalate (PET), triacetyl cellulose (TAC), a polyimide (PI), a polycarbonate (PC), a thermoplastic polyurethane (TPU), or a silicon rubber.

Next, a coating composition for forming the coating layer 22 may be coated on the base film 21 and may then be dried by heating, and then may be hardened through irradiation of UV.

Next, an annealing process may be performed on the hardened coating composition to form the coating layer 22. Here, if the annealing process does not require an additional high moisture condition, the annealing process may be performed in a common moisture condition. For example, the annealing process may be performed under the same humidity conditions (at the same humidity) as previously performed steps, such as the coating, drying, and/or UV hardening. Accordingly, the coating layer may be manufactured through the same (single-acting) equipment as the process of the coating and drying of the described coating composition. According to this manufacturing process, the manufacturing time and cost may be advantageously reduced.

The following Examples and Comparative Examples are provided in order to highlight characteristics of one or more embodiments.

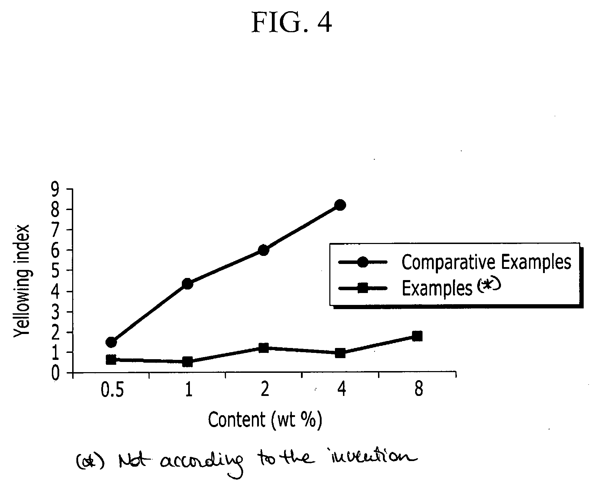

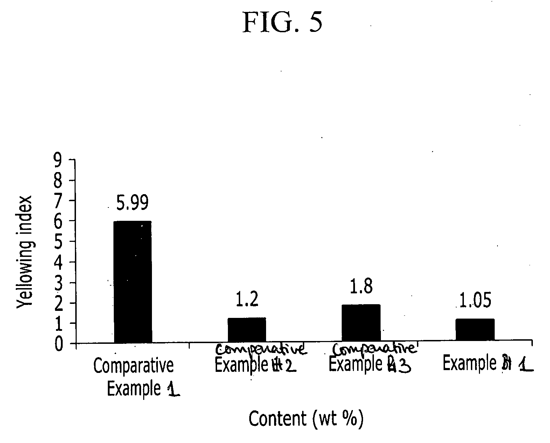

Next, a yellowing index for Examples and Comparative Examples will be described with reference to FIG. 4 and FIG. 5. The graph of FIG. 4 is based on Table 1, below, and the graph of FIG. 5 is based on Table 2, below.

First, referring to FIG. 4 and Table 1, the coating layer according to the Examples was formed using a coating composition that included the monomer of Formula 1 (R' = epoxy ethyl group) the iodine-based initiator of Formula 2, and the coating layer of the Comparative Examples was formed using a coating composition that included a sulfur-based initiator different to the borate-based initiator of Formula 3.

As a result of examining the yellowing index (ΔYI) by differentiating the content of the initiator included in the coating composition, for the coating layer including the sulfur-based initiator of the Comparative Examples, as the content of the initiator is increased, the yellowing phenomenon noticeably appeared. When including the lowest content, it may be seen that the degree of the yellowing index of about 1.53 appeared. The so called Yellowness Index is a number calculated from spectrophotometric data that describes the change in color of a test sample from clear or white toward yellow. This test is most commonly used to evaluate color changes in a material caused by real or simulated outdoor exposure. The test may be performed under the conditions as defined in ASTM E313.

In contrast, the change degree of the yellowing index according to the content of the initiator for the coating layer prepared using the coating composition including the iodine-based initiator was small. For example, the case in which the yellowing index of the largest value appeared (the content of the initiator was 8 wt%) was similar to the case that the lowest index value of the Comparative Examples (the content of the initiator is 0.5 wt%).

For example, when including the iodine-based initiator according to an exemplary embodiment, it can seen that the yellowing phenomenon caused by UV is remarkably reduced.

**(Table 1)**

| | Initiator content (wt%) | Coating layer thickness (µm) | Y₀ | Y₁ | ΔYI | ΔYI / coating layer thickness |
|---|---|---|---|---|---|---|
| Comparative Examples | 0.5 | 49 | 7.05 | 8.58 | 1.53 | 0.03 |
| | 1 | 53 | 7.81 | 12.17 | 4.36 | 0.08 |
| | 2 | 50 | 7.93 | 13.92 | 5.99 | 0.12 |
| | 4 | 50 | 9.09 | 17.24 | 8.15 | 0.16 |
| Example(*) | 0.5 | Not cured | 7.56 | 8.2 | 0.64 | - |
| | 1 | 46 | 7.15 | 7.65 | 0.5 | 0.01 |
| | 2 | 48 | 7.06 | 8.26 | 1.2 | 0.025 |
| | 4 | 41 | 6.94 | 7.89 | 0.95 | 0.02 |
| | 8 | 45 | 7.04 | 8.78 | 1.74 | 0.04 |

| | | | | | | |
|---|---|---|---|---|---|---|
| (*)Not according to the invention | | | | | | |

Next, referring to Table 2 and FIG. 5, the Comparative Example 1 is a case in which the coating layer was prepared from a coating composition including the sulfur-based initiator, and comparative example 2 is a case in which the coating layer was prepared from a coating composition including the iodine-based initiator of Formula 2. Comparative example 3 is a case in which the coating layer was prepared from a coating composition including a borate-based initiator of Formula 3, and Example 1 is a case in which the coating layer was prepared from a coating composition including both the iodine-based initiator of Formula 2 and the borate-based initiator of Formula 3.

**(Table 2)**

| | Initiator content (wt%) | Coating layer thickness (µm) | Y₀ | Y₁ | ΔYI | ΔYI/coating layer thickness | Pencil hardness |
|---|---|---|---|---|---|---|---|
| Comparative Example 1 | 2 | 50 | 7.93 | 13.92 | 5.99 | 0.12 | 5H |
| Comparative example 2 | 2 | 48 | 7.06 | 8.26 | 1.2 | 0.025 | 2-3H |
| Comparative example 3 | 2 | 49 | 7.34 | 9.14 | 1.8 | 0.04 | 6H |
| Example 1 | 1/1 | 49 | 6.78 | 7.83 | 1.05 | 0.02 | 5H |

Referring to Table 2 and FIG. 5, compared with the Comparative Example, it can seen that the yellowing index of the coating layer according to the Examples was remarkably decreased. For example, when including the iodine-based or the borate-based initiator, the yellowing phenomenon of the coating layer by the UV is reduced or even prevented.

As shown in Table 2, in Comparative example 2, in which the coating composition included only the iodine-based initiator, the hardness was somewhat decreased. As shown in Comparative example 3 and example 1 which the coating composition included the borate-based initiator, the hardness of a predetermined degree was provided, thereby controlling the hardness as well as the reliability of the yellowing through the control of the content of the borate-based initiator.

By way of summation and review, a structure may use a touch panel having a display screen integrated therein. Thus, the surface of the window may be more frequently contacted with a finger or the like than mobile devices according to the related art, and the window may require higher strength.

Recently, a flexible device has been considered, and the cover window applied to the display device may be made of a member having flexibility such that it may be bent.

The embodiments may provide a cover window for a display device that helps reduce and/or prevent a yellowing phenomenon and that has surface hardness of more than a predetermined degree while being bent.

By forming the coating layer according to an embodiment on the base film, the cover window helps suppress the yellowing phenomenon while also having surface hardness of the predetermined degree.

The coating layer according to an exemplary embodiment may not only have the hardness suitable for the outer surface of the display device, but may also reduce and/or prevent the yellowing phenomenon generated when being exposed to UV for a long time, thereby providing the cover window with improved reliability and durability.

## Claims

1. A cover window (20), comprising:
a base film (21); and
a coating layer (22) on the base film (21),
wherein the coating layer (22) is formed by polymerization of a coating composition that includes a monomer,
an iodine-based initiator represented by Formula 2: 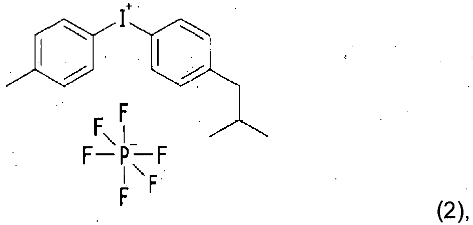 and
a borate-based initiator is a compound represented by Formula 3:

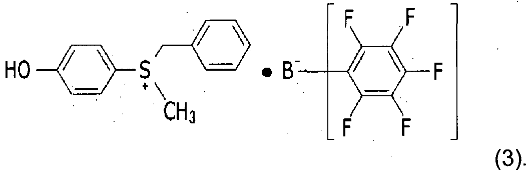

2. The cover window as claimed in claim 1, wherein the coating composition further includes
a solvent.

3. The cover window as claimed in claim 1, wherein the monomer includes a compound represented by Formula 1: 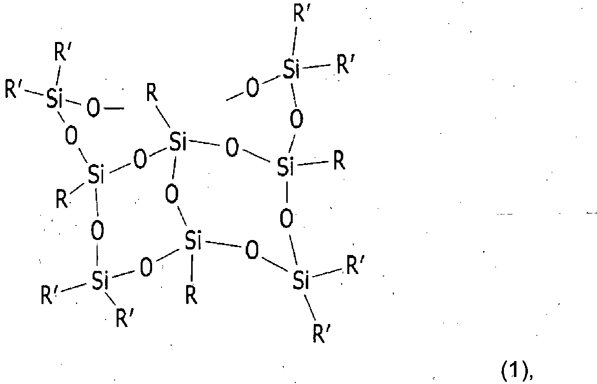 wherein, in Formula 1, R is CH₃, and R' is an epoxy-containing group.

4. The cover window as claimed in claim 2, wherein the at least one of the iodine-based initiator and the borate-based initiator is included in the coating composition in an amount of 0.5 wt% to 8.0 wt%, based on a total weight of the coating composition.

5. The cover window as claimed in claim 2, wherein the monomer is included in the coating composition in an amount of 40 wt% to 90 wt%, based on a total weight of the coating composition.

6. A display device, comprising:
a display panel (10); and
a cover window (20) as defined in one of the preceding claims disposed on the displays panel (10).

7. A method of manufacturing a cover window (20), the method comprising:
providing a base film (21);
coating a coating composition on the base film (21), wherein the coating composition includes a monomer, an iodine-based initiator represented by, Formula 2: 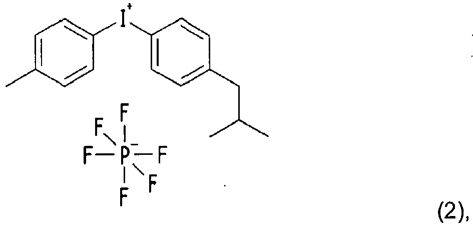
and
a borate-based initiator is a compound represented by Formula 3: 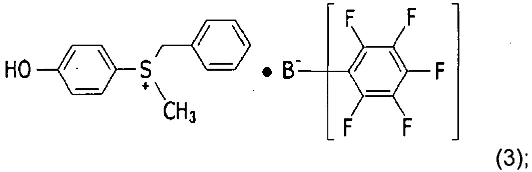
polymerization the coating composition; and
annealing the hardened coating composition.

8. The method of claim 7, wherein the annealing is performed at a same humidity as the providing the base film (21), the coating the coating composition on the base film (21), or the polymerization of the coating composition.

## Patentansprüche

1. Abdeckfenster (20), aufweisend:
einen Trägerfilm (21); und
eine Beschichtungsschicht (22) auf dem Trägerfilm (21), wobei die Beschichtungsschicht (22) durch Polymerisation einer Beschichtungszusammensetzung, die ein Monomer,
einen durch die Formel 2 dargestellten Initiator auf Jodbasis: 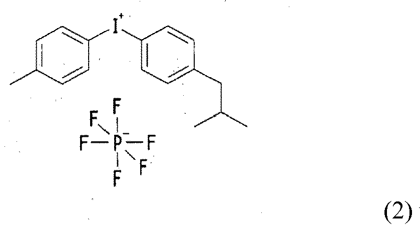 und
einen Initiator auf Boratbasis, der eine durch Formel 3 dargestellte Verbindung ist, 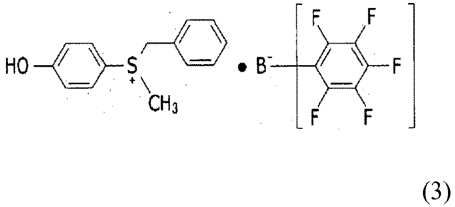 aufweist, ausgebildet wird.

2. Abdeckfenster nach Anspruch 1, wobei die Beschichtungszusammensetzung ferner ein Lösungsmittel aufweist.

3. Abdeckfenster nach Anspruch 1, wobei das Monomer eine durch Formel 1 dargestellte Verbindung aufweist: 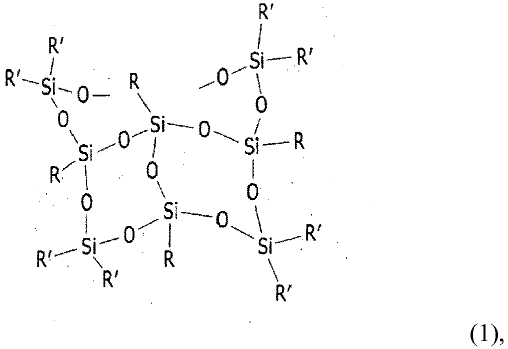 wobei in Formel 1 R CH₃ ist und R' eine epoxidhaltige Gruppe ist.

4. Abdeckfenster nach Anspruch 2, wobei der zumindest eine des Initiators auf Jodbasis und des Initiators auf Boratbasis in der Beschichtungszusammensetzung in einer Menge von 0,5 Gew.-% bis 8,0 Gew.-%, bezogen auf ein Gesamtgewicht der Beschichtungszusammensetzung, enthalten ist.

5. Abdeckfenster nach Anspruch 2, wobei das Monomer in der Beschichtungszusammensetzung in einer Menge von 40 Gew.-% bis 90 Gew.-%, bezogen auf ein Gesamtgewicht der Beschichtungszusammensetzung, enthalten ist.

6. Anzeigevorrichtung, aufweisend:
eine Anzeigetafel (10); und
ein in einem der vorhergehenden Ansprüche definiertes Abdeckfenster (20), das auf der Anzeigetafel (10) angeordnet ist.

7. Verfahren zur Herstellung eines Abdeckfensters (20), wobei das Verfahren aufweist:
Bereitstellen eines Trägerfilms (21);
Aufbringen einer Beschichtungszusammensetzung auf dem Trägerfilm (21), wobei die Beschichtungszusammensetzung ein Monomer, einen durch Formel 2 dargestellten Initiator auf Jodbasis: 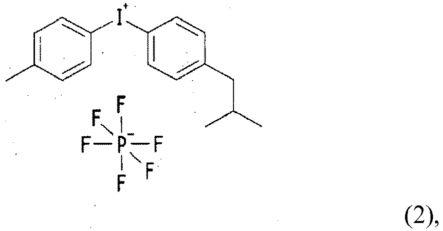 und
einen Initiator auf Boratbasis, der eine durch Formel 3 dargestellte Verbindung ist, 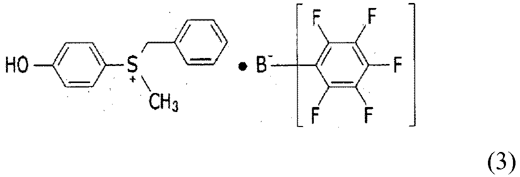 aufweist;
Polymerisation der Beschichtungszusammensetzung; und
Glühen der gehärteten Beschichtungszusammensetzung.

8. Verfahren nach Anspruch 7, wobei das Glühen bei einer gleichen Feuchtigkeit wie das Bereitstellen des Trägerfilms (21), das Aufbringen der Beschichtungszusammensetzung auf dem Trägerfilm (21) oder die Polymerisation der Beschichtungszusammensetzung durchgeführt wird.

## Revendications

1. Fenêtre de recouvrement (20), comprenant :
un film de base (21) ; et
une couche de revêtement (22) sur le film de base (21),
dans laquelle la couche de revêtement (22) est formée par polymérisation d'une composition de revêtement qui contient un monomère,
un initiateur à base d'iode représenté par la Formule 2 : 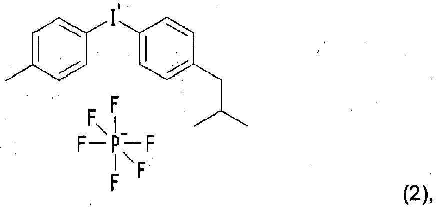 et
un initiateur à base de borate qui est un composé représenté par la Formule 3 :

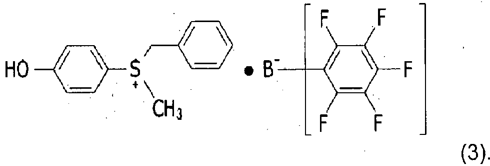

2. Fenêtre de recouvrement selon la revendication 1, dans laquelle la composition de revêtement contient en outre :
un solvant.

3. Fenêtre de recouvrement selon la revendication 1, dans laquelle le monomère contient un composé représenté par la Formule 1 : 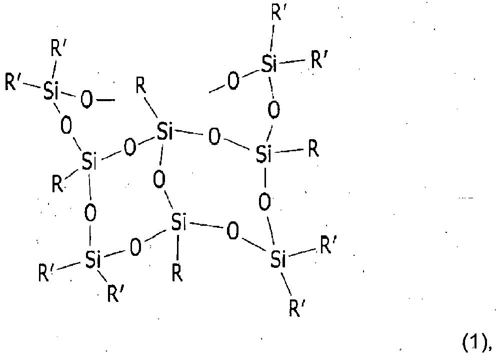 dans laquelle, dans la Formule 1, R représente un groupe CH₃, et R' représente un groupe contenant un époxy.

4. Fenêtre de recouvrement selon la revendication 2, dans laquelle l'au moins un parmi l'initiateur à base d'iode et l'initiateur à base de borate est présent dans la composition de revêtement en une quantité de 0,5 % en poids à 8,0 % en poids, sur la base du poids total de la composition de revêtement.

5. Fenêtre de recouvrement selon la revendication 2, dans laquelle le monomère est présent dans la composition de revêtement en une quantité de 40 % en poids à 90 % en poids, sur la base du poids total de la composition de revêtement.

6. Dispositif d'affichage, comprenant :
un panneau d'affichage (10) ; et
une fenêtre de recouvrement (20) selon l'une quelconque des revendications précédentes agencée sur le panneau d'affichage (10).

7. Procédé de fabrication d'une fenêtre de recouvrement (20), le procédé comprenant :
la fourniture d'un film de base (21) ;
l'application d'une composition de revêtement sur le film de base (21), la composition de revêtement contenant un monomère, un initiateur à base d'iode représenté par la Formule 2 : 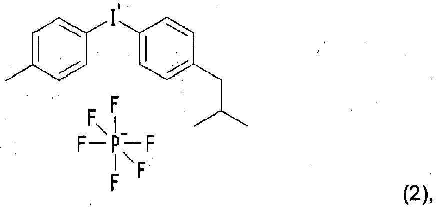 et
un initiateur à base de borate qui est un composé représenté par la Formule 3 : 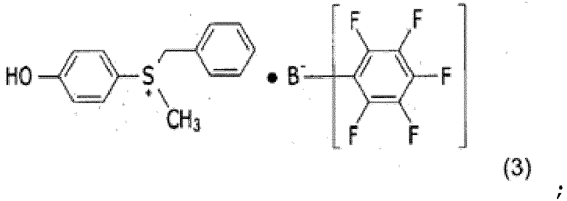
la polymérisation de la composition de revêtement ; et
le recuit de la composition de revêtement durcie.

8. Procédé selon la revendication 7, dans lequel le recuit est effectué à la même humidité que celle de la fourniture du film de base (21), de l'application de la composition de revêtement sur le film de base (21), ou de la polymérisation de la composition de revêtement.
